Europäisches Patentamt

European Patent Office

Office européen des brevets

(11) Veröffentlichungsnummer: **0 066 723**
**B1**

(12) # EUROPÄISCHE PATENTSCHRIFT

(45) Veröffentlichungstag der Patentschrift:
31.07.85

(51) Int. Cl.⁴: **G 01 P 1/12**

(21) Anmeldenummer: **82104104.3**

(22) Anmeldetag: **12.05.82**

(54) **Rüttelvorrichtung für Fahrtschreiber.**

(30) Priorität: **04.06.81 DE 3122209**

(43) Veröffentlichungstag der Anmeldung:
**15.12.82 Patentblatt 82/50**

(45) Bekanntmachung des Hinweises auf die Patenterteilung:
**31.07.85 Patentblatt 85/31**

(84) Benannte Vertragsstaaten:
**CH DE FR GB LI**

(56) Entgegenhaltungen:
**DE - B - 1 225 905**
**DE - B - 1 262 655**
**DE - B - 1 574 557**
**DE - C - 157 359**
**DE - C - 1 232 379**

(73) Patentinhaber: **Kienzle Apparate GmbH,
Heinrich-Hertz-Strasse, D-7730 Villingen-Schwenningen
(DE)**

(72) Erfinder: **Helmschrott, Norbert, Wasenstrasse 94,
D-7730 Villingen-Schwenningen (DE)**
Erfinder: **Schultze, Hartmut, Oskar-Joos-Strasse 1,
D-7730 Villingen-Schwenningen (DE)**
Erfinder: **Maier, Wolfgang, Kopsbühl 80,
D-7730 Villingen-Schwenningen (DE)**

**Beschreibung**

Die Erfindung betrifft eine Rüttelvorrichtung für Fahrtschreiber mit einem Pendel, welches in Wirkverbindung mit einer Pendelfeder steht, dessen auf betriebsbedingte Schwingungen eines Kraftfahrzeuges ansprechende Pendelmasse an einem schwenkbar gelagerten, starren Pendelarm angeordnet ist und dessen Anordnung im Fahrtschreiber derart getroffen ist, daß das Pendel in den möglichen Einbaulagen des Fahrtschreibers in einem Kraftfahrzeug wenigstens bezüglich vertikal gerichteter Beschleunigungen stets die gleiche Schwingungsempfindlichkeit aufweist. Dabei sind mit möglichen Einbaulagen Einbauvarianten des Fahrtschreibers im Armaturenbrett eines Kraftfahrzeuges gemeint, die zwischen einer Einbaulage mit vertikaler Geräteachse und einer solchen mit horizontaler Geräteachse denkbar sind.

In Fahrtschreibern, die von Anzeigefunktionen abgesehen, bekanntlich der Erfassung sowohl wesentlicher Betriebsdaten des Fahrzeuges als auch der Arbeitszeitdaten des oder der Fahrer dienen, somit Aufzeichnungen von dokumentarischem Wert liefern, sind auch in neuerer Zeit mechanische Rüttelvorrichtungen als weitgehend »unbestechliche« Kontrolleinrichtungen von entscheidender Bedeutung. Derartige, im wesentlichen von einem Feder-Masse-System gebildete Rüttelvorrichtungen, die mittelbar oder unmittelbar auf geeignete Registrierorgane einwirken können, liefern — üblicherweise in Form eines Balkendiagrammes — selbst dann noch Aufzeichnungen und damit eine Kontrolle über die Benutzung des Fahrzeuges, wenn der Antrieb des Fahrtschreibers, sei es nun die elektrische Verbindung zu einem dem Fahrtschreiber zugeordneten elektrischen Geber oder sei es die altbekannte biegsame Welle, ausgefallen ist, möglicherweise auch in betrügerischer Absicht unterbrochen wurde. Bei entsprechender Aufzeichnungsqualität ist es selbstverständlich auch möglich, ein solches Balkendiagramm hinsichtlich der Fahr- und Haltezeiten des betreffenden Fahrzeuges auszuwerten.

Die bisher bekannten Rüttelvorrichtungen mit einem auf einer Achse gelagerten und somit nur in einer Ebene schwingungsfähigen Pendel — aus Kostengründen (Pendel und Registrierorgan können als eine im wesentlichen einteilige Baugruppe ausgebildet werden) liegt diese Ebene im allgemeinen parallel zur Aufzeichnungsträgerebene und diese wiederum parallel zur Frontfläche des Aufzeichnungsträgers — werden jedoch den Anforderungen, die an eine derartige Kontrolleinrichtung zu stellen sind, nicht mehr gerecht. Beispielsweise wäre wegen der im allgemeinen relativ guten Fahrbahnbedingungen und der stark schwingungsdämpfenden Federungen moderner Fahrzeuge für eine zufriedenstellende Funktion einer Rüttelvorrichtung eine erhebliche Steigerung der Schwingungsempfindlichkeit des Pendels durch eine verbesserte Lagerung und sorgfältige Abstimmung des Feder-Masse-Systems erforderlich. Es wäre auch wünschenswert, zusätzlich zu den fahrbahnbedingten, im wesentlichen vertikal gerichteten Beschleunigungen die Längs- oder Querbeschleunigungen des Fahrzeuges bei ein und derselben Anordnung der Rüttelvorrichtung nutzen zu können. Ein weiterer entscheidender Nachteil, den es bei den bisher üblichen Rüttelvorrichtungen zu verbessern gilt, ist deren Lageabhängigkeit, d. h. die erhebliche Abhängigkeit der Schwingungsempfindlichkeit des Pendels von der Einbaulage des Fahrtschreibers im Armaturenbrett eines Kraftfahrzeuges.

Diese Forderungen haben nun vielfach dazu geführt, daß bei modernen Fahrtschreibern auf die Kontrollfunktion der Rüttelvorrichtung verzichtet und, insbesondere einer fehlerfreien maschinellen Auswertbarkeit wegen, das Fahrzeit-Balkendiagramm mittels eines elektrischen oder wegabhängig betätigten Registrierorgans aufgezeichnet worden ist.

Andererseits sind Anordnungen, wie sie beispielsweise die DE-PS 12 32 379 zeigt, bekanntgeworden, bei denen ein in einer Ebene und innerhalb einer Anschlagbegrenzung frei schwingendes Pendel sowie die mit dem Pendel eine Einheit bildende Registriereinrichtung zusätzlich, und zwar impulsförmig mittels eines elastischen Betätigungsgliedes, welches beispielsweise mit einer wegabhängig angetriebenen Nockenscheibe zusammenwirkt, angestoßen wird. Eine solche Anordnung liefert zwar bei ungestörter Funktion des Fahrtschreibers ein auch maschinell gut lesbares Balkendiagramm, ihre Kontrollfunktion bei ausgefallenem Fahrtschreiberantrieb ist jedoch völlig unzureichend.

Demgegenüber bietet der Gegenstand der DE-PS 15 74 557, der über eine Hub- und Schaltradanordnung eine Entkopplung des Pendels vom Registrierorgan vorsieht, wobei das Schaltrad nicht allein durch Pendelausschläge sondern auch durch Schaltschritte anderer Antriebsglieder betätigbar sein kann, den Vorteil, daß innerhalb gewisser Grenzen die Breite des Balkendiagramms unabhängig ist von der Schwingungsamplitude und der Häufigkeit der Schaltschritte des Pendels und somit auch relativ kleine Schwingungsamplituden zu einer die volle Diagrammbreite aufweisenden Registrierbewegung summierbar sind. Dies bedeutet zwar eine erhebliche Empfindlichkeitssteigerung, der Aufwand hierfür ist jedoch, abgesehen davon, daß die Funktion dieser Anordnung entscheidend von der Einbaulage des Fahrtschreibers abhängig ist, unangemessen hoch.

Bei einer mit der DE-PS 12 62 655 bekanntgewordenen Rüttelvorrichtung ist das Problem der Lageabhängigkeit dadurch zu lösen versucht worden, daß das eine Ende der Penselfeder eines in einer Ebene schwingungsfähig angeordneten sozusagen Arbeitspendels nicht ortsfest sondern an einem Hilfspendel angelenkt ist. Die Anordnung des Hilfspendels ist derart gewählt, daß das Hilfspendel relativ zur Schwingungsebene des Arbeitspendels verschwenkbar ist und daß die Wirkungslinie der Pendelfeder unabhängig von der Schwingungsebene des Pendels stets vertikal gerichtet ist. Der Vorteil des selbsttätigen Nachführens der Pendelfeder entsprechend der Einbaulage des Fahrtschreibers ist einerseits darin zu sehen, daß bei einem gemäß dieser Patentschrift auf einer ortsfesten Achse gelagerten Pendel die Zunahme des Reibungsmomentes durch die ungleichmäßige Lagerbelastung bei horizontalem Einbau des Fahrtschreibers bzw. vertikal angeordneter Pendelachse kompensiert wird, andererseits die Empfindlichkeit des Pendels erhöht wird, da die bei horizontaler Schwingungsebene in Schwingungsrichtung des Pendels wirksame Komponente der Pendelfeder bei ruhendem Pendel Null ist. Die Empfindlichkeitsverbesserung bzw. Empfindlichkeitsanpassung betrifft bei dieser Vorrichtung jedoch lediglich die Empfindlichkeit bezüglich Längs- oder Querbeschleunigungen, während die an sich vorherrschenden, energiereichen, vertikal gerichteten Beschleunigungen in der horizontalen Einbaulage unwirksam sind. Hinzu kommt, daß diese Rüttelvorrichtung einen erheblichen Fertigungsaufwand und Raumbedarf erfordert.

Mit dem Problem der Lageabhängigkeit der Rüttelvorrichtung eines Fahrtschreibers und der Nutzung der vertikal gerichteten Beschleunigungen befaßt sich ferner die DE-PS 12 25 905. Der Gegenstand dieser Patentschrift sieht vor, ein Pendel auf einer in den möglichen Einbaulagen des Fahrtschreibers horizontal angeordneten Achse zu lagern, so daß das Pendel in gleicher Weise wie das zuvor erwähnte Hilfspendel in einer zur jeweiligen Aufzeichnungsträgerebene und somit zur jeweiligen Bewegungsebene des dem Pendel zugeordneten Registrierorgans senkrechten, d. h. in einer vertikalen Ebene schwingt. Diese Anordnung macht es erforderlich, die Bewegungen des Pendels über geeignete Kupplungsmittel auf das Registrierorgan zu übertragen. Dabei tritt, vom Aufwand abgesehen, erhebliche Lagerreibung auf, zumal die als Pendelfedern dienenden Rückzugfedern nicht am Pendel sondern am Registrierorgan angreifen. Andererseits sind mit dieser Anordnung, insbesondere wenn das Pendel derart angeordnet wird, daß es in der Ruhelage etwa unter einem Winkel von 45° zur Vertikalen geneigt ist, sowohl in Fahrtrichtung wirkende, als auch vertikal gerichtete, also fahrbahnabhängige Beschleunigungen für den Antrieb des Pendels nutzbar. Dies gilt jedoch nur für die extremen Einbaulagen des Fahrtschreibers, d. h. für die horizontale bzw. vertikale Lage der Geräteachse. Bei allen anderen Einbaulagen muß, um denselben Antriebseffekt zu erzielen, eine entsprechende Einstellung des Pendels von Hand vorgenommen werden, was bedeutet, daß zunächst geeignete Mittel hierfür vorgesehen sein müssen, und daß, wenn diese Anpassung an eine nicht vorsehbare Einbaulage, beispielsweise am Einbauort des Fahrtschreibers erforderlich wird, ein einbaufertig plombiertes Gerät geöffnet werden muß, um mehr oder weniger gefühlsmäßig die erforderliche Einstellung vornehmen zu können. Auch die Empfindlichkeit dieser Rüttelvorrichtung ist infolge der erheblichen Reibungsverluste sowie der wegen der ungünstigen Lage des Pendels im Fahrtschreiber nicht beliebig gestaltbaren Pendelmaße mangelhaft, andererseits sind die konstruktiven Gegebenheiten dieser Rüttelvorrichtung nicht mehr im gewünschten Sinne optimierbar.

Die Aufgabe, die der vorliegenden Erfindung gestellt war, bestand somit darin, eine im Vergleich mit dem Stand der Technik mit verringertem Raumbedarf und Fertigungsaufwand realisierbare Rüttelvorrichtung für Fahrtschreiber zu schaffen, die ohne daß Einstellarbeit erforderlich ist, in den möglichen Einbaulagen des Fahrtschreibers, vorzugsweise bezüglich vertikal gerichteter Beschleunigungen, stets die gleiche Schwingungsempfindlichkeit aufweist.

Die Lösung dieser Aufgabe sieht vor, daß die Pendelfeder in Richtung der geometrischen Achse des Pendels wirksam ist, daß an dem Pendelarm ein Flansch angeordnet ist und daß eine gehäusefeste Auflage, an der sich das unter der Wirkung der Pendelfeder stehende Pendel mittels des Flansches abstützt, vorgesehen und derart dem Pendel zugeordnet ist, daß die geometrische Pendelachse in jeder möglichen Einbaulage des Fahrtschreibers stets horizontal ausgerichtet ist.

Ein bevorzugtes Ausführungsbeispiel der Erfindung ist dadurch gekennzeichnet, daß die Auflage und der Flansch die Elemente einer ringförmigen Schneidenlagerung bilden und daß die Auflage als eine dem Flansch zugeordnete Lagerpfanne ausgebildet ist.

Im folgenden sei die Erfindung anhand der Zeichnungen näher erläutert. Es zeigt

Fig. 1 eine Schemaskizze möglicher Einbaulagen eines Fahrtschreibers im Armaturenbrett eines Kraftfahrzeuges,

Fig. 2 die Draufsicht eines Ausführungsbeispieles der erfindungsgemäßen Rüttelvorrichtung,

Fig. 3 eine Seitenansicht des Ausführungsbeispieles gemäß Fig. 2,

Fig. 4 die Draufsicht eines weiteren Ausführungsbeispieles der erfindungsgemäßen Rüttelvorrichtung,

Fig. 5 eine vergrößerte Darstellung der Lagerung des Pendels gemäß Fig. 2.

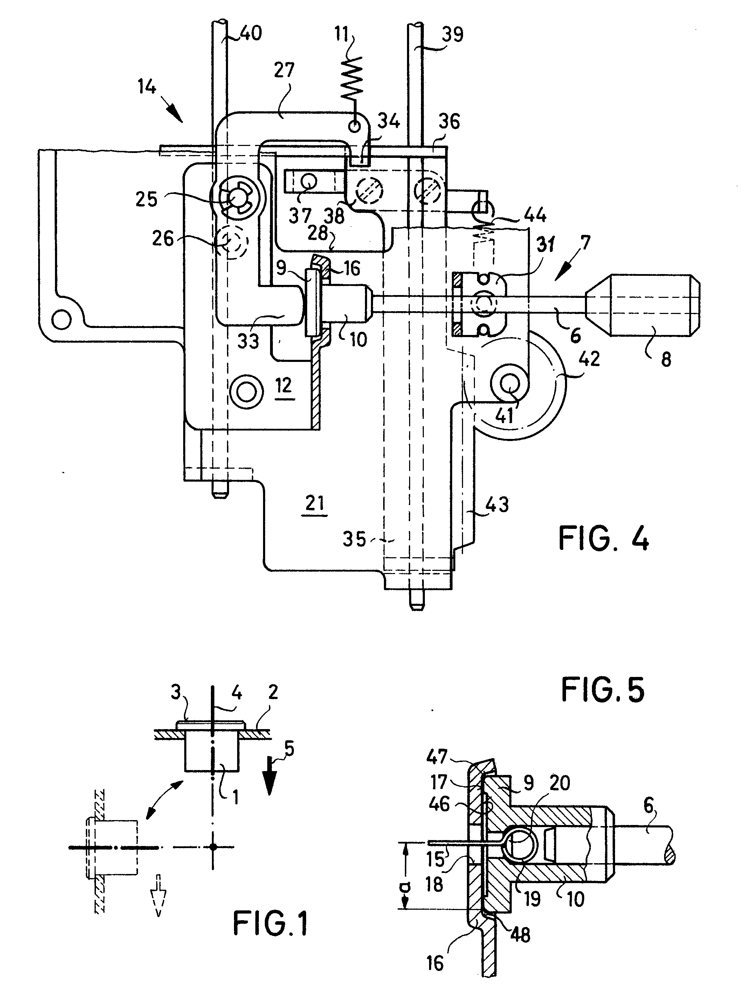

Die der Orientierung bezüglich der Einbaumöglichkeiten eines Fahrtschreibers im Armaturenbrett eines Kraftfahrzeuges dienende Schemaskizze Fig. 1 zeigt einen Fahrtschreiber 1, der in einem Armaturenbrett 2 beispielsweise derart eingebaut ist, daß seine Frontfläche 3, an der in der bekannter Weise die Anzeige verschiedener Fahrtdaten erfolgt, in einer horizontalen Ebene liegt, oder, anders ausgedrückt, die Geräteachse 4 vertikal ausgerichtet ist. Im anderen Falle — der Fahrtschreiber 1 ist um 90° verschwenkt dargestellt — befindet sich die Frontfläche des Fahrtschreibers 1 in einer vertikalen Ebene, und die Geräteachse 4 ist horizontal ausgerichtet. Zwischen diesen beiden Extremlagen befinden sich die sog. möglichen Einbaulagen. Die Pfeile 5 sollen die Richtung der Schwerkraft symbolisieren.

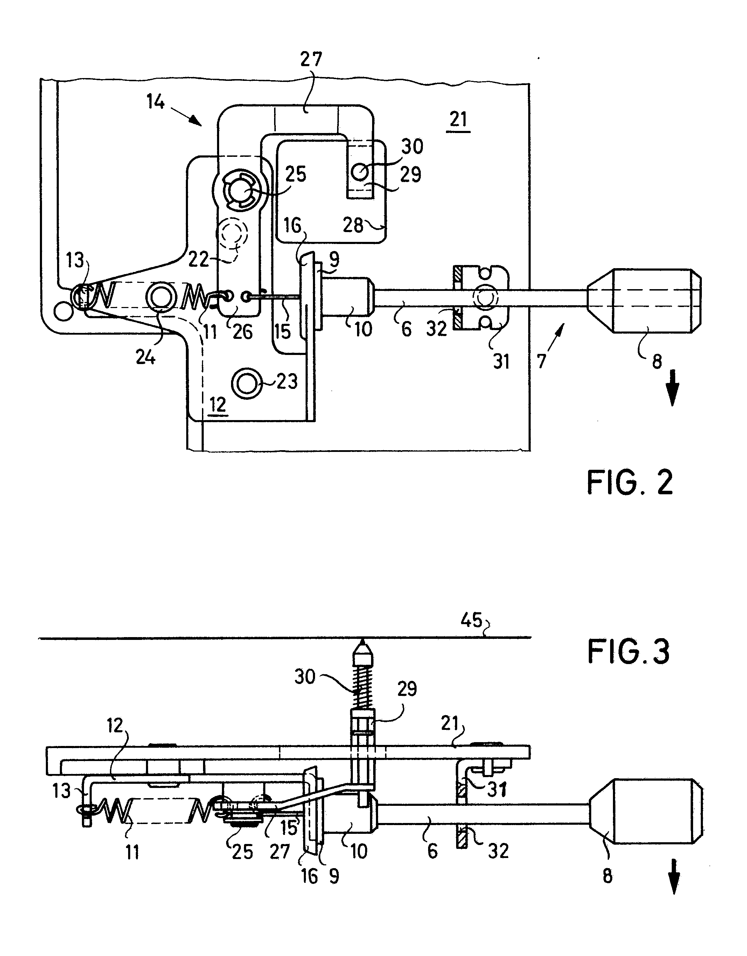

Die Draufsicht Fig. 2 zeigt nun die erfindungsgemäße Rüttelvorrichtung mit Blickrichtung auf die Geräteachse 4, d. h. die Anordnung der Rüttelvorrichtung im Fahrtschreiber 1 ist derart getroffen, daß sie, um ein Optimum an Packungsdichte zu erzielen, dem für Fahrtschreiber üblichen konstruktiven Grundsatz entspricht, nachdem der Aufzeichnungsträger, im allgemeinen ist dies eine Diagrammscheibe, in einer Ebene parallel zur Frontfläche 3 des Fahrtschreibers 1 angeordnet ist und die größtmögliche Ausdehnung der Rüttelvorrichtung in diesem Falle der Arm 6 des Pendels 7 sich ebenfalls in einer Ebene parallel zur Frontfläche 3 und somit zum Aufzeichnungsträger befindet.

Im einzelnen zeigt Fig. 2, daß an dem einen Ende des Pendelarmes 6 eine Masse 8 ausgebildet, vorzugsweise jedoch verschiebbar befestigt ist, um eine Justierung zu ermöglichen und daß am anderen Ende des Pendelarmes 6 eine mit einem Flansch 9 versehene Buchse 10 befestigt ist. Mittels einer als Pendelfeder wirksamen Zugfeder 11, die, wie Fig. 2 zeigt, einerseits an einem an einem Halter 12 ausgebildeten Arm 13 eingehängt ist, andererseits an einem Hebel 14 angreift, wird das Pendel 7 unter Zwischenschaltung einer mit dem Hebel 14 und dem Pendel 7 gelenkig verbunden Koppel 15 gegen eine Auflage 16 gezogen, d. h. das Pendel 7 stützt sich unter der Wirkung der Pendelfeder 11 mittels der stirnseitigen Stützfläche des an ihm vorgesehenen Flansches 9 an der Auflage 16 ab. Wie näher aus Fig. 5 ersichtlich ist, ist die ebenfalls am Halter 12 ausgebildete Auflage 16 an ihrer dem Flansch 9 zugewandten Seite pfannenförmig ausgebildet, während am Flansch 9 stirnseitig lediglich eine ringförmige Stützfläche 17 angeformt ist, um eine eindeutige Anlage des Pendels 7 an der Auflage 16 zu gewährleisten. Ferner zeigt Fig. 5, daß die beispielsweise aus Draht gefertigte Koppel 15 durch eine Öffnung 18 in der Auflage 16 hindurchgreift und unter der Wirkung der Pendelfeder 11 mit ihrem in geeigneter Weise angeformten Ende 19 an einer innerhalb der Buchse 10 befindlichen Bohrungsstufe 20 anliegt. Der Halter 12, der gemäß den Fig. 2 und 3 auf einem in den Fahrtschreiber einsetzbaren Gestell 21 befestigt ist (Niete 22, 23, 24), trägt ferner eine Achse 25, auf der der zweiarmig ausgebildete Hebel 14 schwenkbar gelagert ist. Am einen Arm 26 des Hebels 14 greifen, wie bereits beschrieben, die Pendelfeder 11 und die Koppel 15 an, während an dem anderen Arm 27 eine durch eine Öffnung 28 im Gestell 21 hindurchgreifende Lagerbrücke 29 für einen in dieser gefedert gelagerten Schreibstift 30 ausgebildet ist. Außerdem ist mit dem Gestell 21 ein dem Pendel 7 bzw. dem Pendelarm 6 zugeordnetes Anschlagelement 31 verbunden. Dabei ist der Pendelarm 6 durch eine in dem Anschlagelement 31 vorgesehene Bohrung 32 mit allseitigem Spiel hindurchgeführt.

Denkbar sind in diesem Zusammenhang auch andere Gestaltungsformen, beispielsweise eine solche, bei der der Halter 12 und das Anschlagelement 31 ein Teil bilden oder der Arm 13, die Auflage 16 und das Anschlagelement 31 unmittelbar an dem Gestell 21 ausgebildet sind.

Beim Ausführungsbeispiel gemäß Fig. 4 ist die Anordnung der Pendelfeder 11, des Pendels 7, der Auflage 16, sowie des Hebels 14 derart gewählt, daß das Pendel 7 im Gegensatz zum bereits beschriebenen Ausführungsbeispiel durch Druck gegen die Auflage 16 an dieser gehalten wird. Dabei greift die Pendelfeder 11 an den Arm 27 des Hebels 14 an, während an dem Arm 26 ein Finger 33 ausgebildet ist, mittels dessen der Hebel 14 unmittelbar im Zentrum des Flansches 9 auf diesen einwirkt. Dabei ist der Finger 33 derart geformt, daß eine punktförmige Berührung gewährleistet ist.

Die Fig. 4 zeigt ferner, daß der Hebel 14 bzw. dessen Arm 27 mittels seines abgekröpften Endes 34 mit einem Schlitten 35 bzw. mit einem am Schlitten 35 angeformten Steg 36 zusammenwirkt, wenn sich der Schlitten 35 — es handelt sich dabei um den Geschwindigkeitsregistrierschlitten des Fahrtschreibers 1 — in seiner Nullage bzw. Grundstellung befindet. Bekanntlich ist auf dem Schlitten 35, welche auf in dem Gestell 21 gehalterten Führungsstangen 39 und 40 verschiebbar gelagert ist, ein einen gefedert gelagerten Schreibstift 37 tragender Halter 38 befestigt. Ein auf einer ebenfalls im Gestell 21 befestigten Achse 41 gelagertes Zahnrad 42, welches mit einer am Schlitten 35 ausgebildeten Verzahnung 43 in Eingriff steht, ist Glied einer, weil nicht erfindungswesentlich, nicht dargestellten getrieblichen Verbindung zwischen dem Geschwindigkeitsmeßwerk des Fahrtschreibers 1 und dem Geschwindigkeitsschreibstift 37. Die Rüttelvorrichtung kann in diesem Falle derart justiert sein, daß das abgekröpfte Ende 34 des Hebels 14 dem Schlitten 35, der unter der Wirkung einer schwachen, das Getriebespiel einseitig ausgleichenden Feder 44 steht, als Nullanschlag dient.

Wird, um noch auf die Funktion der beschriebenen Rüttelvorrichtung einzugehen, angenommen, daß in Fig. 2, die eine Ansicht in Richtung der Geräteachse zeigt, die Schwerkraft in Pfeilrichtung wirksam ist, so wird bei vertikal gerichteten, also im wesentlichen fahrbahnbedingten Beschleunigungen das Pendel 7, soweit dies die Bohrung 32 im Anschlagelement 31 zuläßt, in einer Ebene parallel zum Aufzeichnungsträger 45 bzw. zur Frontfläche 3 des Fahrtschreibers 1 schwingen. Dabei rollt, wie Fig. 5 zeigt, ausgehend vom ruhenden Zustand, in dem sich das Pendel 7 unter der Wirkung der Pendelfeder 11 am Boden 46 der Auflage 16 abstützt, die vorzugsweise gerundete Kante 47 des Flansches 9 im Grunde, besser gesagt in der ringförmigen, ebenfalls gerundeten Kerbe 48 der Auflage 46 ab. Die Drehachse des Pendels 7 ist somit, abhängig von der Einbaulage bzw. von der Richtung der antreibenden Beschleunigung, die jeweilige im Kippunkt des Pendels 7 an die kreisförmige Kante 47 bzw. Kerbe 48 anlegbare Tangente. Da der Gelenkpunkt zwischen der Koppel 15 und dem Pendel 7 gegenüber der Drehachse des Pendels 7 einen Hebelarm a aufweist, wird beim Schwingen des Pendels 7 der Gelenkpunkt verschwenkt und somit über die Koppel 15 auch der Hebel 14 betätigt, so daß der auf dem Hebel 14 angeordnete Schreibstift bzw. das vom Hebel 14 betätigte Registrierorgan auf dem Aufzeichnungsträger 45 ein Balkendiagramm aufzeichnet.

Wird nun gemäß Fig. 3 der Fahrtschreiber 1 derart eingebaut, daß die Schwerkraft (Pfeil) senkrecht zur Frontfläche 3 bzw. zum Aufzeichnungsträger 45 wirksam ist, so wirkt das Pendel 7 in gleicher Weise, d. h. die Kante 47 rollt beim Schwingen des Pendels 7 wiederum in der Kerbe 48 ab. Es ist lediglich der Kippunkt verlagert, ohne daß hierfür irgendwelche Justierarbeit erforderlich ist.

Die geschilderten Lagerbedingungen sind infolge der durch die Auflage 16 und den Flansch 9 gebildeten ringförmigen Schneidenlagerung, die nicht allein ein Kippen des Pendels 7 in beliebige Richtungen oder beispielsweise eine taumelnde Bewegung des Pendels 7 sondern auch eine hohe Schwingungsempfindlichkeit ermöglicht, selbstverständlich auch in den zwischen den Extremlagen wählbaren Einbaulagen gegeben, oder, anders betrachtet, die Lagerbedingungen des Pendels 7 und somit der erfindungsgemäßen Rüttelvorrichtung sind in ein und derselben Einbaulage sowohl hinsichtlich vertikal als auch hinsichtlich horizontal gerichteter sowie hinsichtlich beliebiger resultierend gerichteter Beschleunigung jeweils gleich.

Ferner sei noch erwähnt, daß die erfindungsgemäße Rüttelvorrichtung in einer relativ flachen Bauweise realisierbar ist und sich letztlich auch für einen nachträglichen bzw. wahlweisen Einbau eignet.

### Patentansprüche

1. Rüttelvorrichtung für Fahrtschreiber mit einem Pendel (7), welches in Wirkverbindung mit einer Pendelfeder (11) steht, dessen auf betriebsbedingte Schwingungen eines Kraftfahrzeuges ansprechende Pendelmasse an einem schwenkbar gelagerten, starren Pendelarm (6) angeordnet ist und dessen Anordung im Fahrtschreiber derart getroffen ist, daß das Pendel in den möglichen Einbaulagen des Fahrtschreibers in einem Kraftfahrzeug wenigstens bezüglich vertikal gerichteter Beschleunigungen stets die gleiche Schwingungsempfindlichkeit aufweist, dadurch gekennzeichnet,
daß die Pendelfeder (11) in Richtung der geometrischen Achse des Pendels (7) wirksam ist,
daß an dem Pendelarm (6) ein Flansch (9) angeordnet ist, und
daß eine gehäusefeste Auflage (16), an der sich das unter der Wirkung der Pendelfeder (11) stehende Pendel (7) mittels des Flansches (9) abstützt, vorgesehen und derart dem Pendel (7) zugeordnet ist, daß die geometrische Pendelachse in jeder möglichen Einbaulage des Fahrtschreibers (1) stets horizontal ausgerichtet ist.

2. Rüttelvorrichtung nach Anspruch 1, dadurch gekennzeichnet, daß die Auflage (16) und der Flansch (9) die Elemente einer ringförmigen Schneidenlagerung bilden und daß die Auflage (16) als eine dem Flansch (9) zugeordnete Lagerpfanne ausgebildet ist.

3. Rüttelvorrichtung nach Anspruch 1 und 2, dadurch gekennzeichnet, daß ein auf einer ortsfesten Achse (25) schwenkbar gelagerten, einen Schreibstift (30) tragender oder auf ein getrennt gelagertes Registrierorgan (35, 37) einwirkender Hebel (14) vorgesehen ist, der einerseits gelenkig mit dem Pendel (7) verbunden ist, andererseits unter der Wirkung der Pendelfeder (11) steht.

4. Rüttelvorrichtung nach Anspruch 1 bis 3, dadurch gekennzeichnet, daß der Hebel (14) mittels eines an einem Arm (26) ausgebildeten Fingers (33) im Zentrum des Flansches (9) angreift und unter der Wirkung der Pendelfeder (11) das Pendel (7) durch Druck an der Auflage (16) festhält.

5. Rüttelvorrichtung nach Anspruch 1 bis 3, dadurch gekennzeichnet, daß eine durch eine Öffnung (18) im Boden (46) der Auflage (16) hindurchgreifenden Koppel (15) vorgesehen ist, die einerseits mit dem Pendel (7), andererseits mit dem Arm (26) des Hebels (14) gelenkig verbunden ist und daß das eine Ende der Pendelfeder (11) ebenfalls an dem Arm (26) des Hebels (14) angreift.

6. Rüttelvorrichtung nach Anspruch 1 bis 5, dadurch gekennzeichnet, daß der Flansch (9) an einer mit dem Pendelarm (6) verbindbaren Buchse (10) angeformt ist.

### Claims

1. Oscillatory pendulum device for tachographs having a pendulum (7) which is in operative connection with a pendulum spring (11) and the pendulum mass of which reacting to operative oscillations of the vehicle is arrenged at a rotatably mounted rigid pendulum arm (6), the arrangement in the tachograph being such that the pendulum has always the same sensitivity to oscillations at least with respect to vertically directed accelerations in all possible mounting positions of the tachograph in the vehicle, characterized in that
the pendulum spring (11) ist effective in the direction of the geometrical axes of the pendulum (7),
that at the pendulum arm (6) a flange (9) is arranged and
that a support (16) fixed to the housing is provided at which the pendulum (7) supports itself by means of the flange (9) and under the action of the pendulum spring (11) and arranged with respect to the pendulum (7) in such manner that the geometrical axis of the pendulum is always horizontally directed in each possible installation position of the tachograph.

2. Oscillatory pendulum device according to Claim 1, characterized in that the support (16) and the flange (9) are elements of a ring-shaped knife edged bearing and in that the support (16) is in the form of a bearing pan attributed to the flange (9).

3. Oscillatory pendulum device according to Claims 1 and 2, characterized in that a lever (14) is provided which is rotatably mounted on a fixed axis (25) and bears a recording means (30) or actuates a separately mounted recording means (35, 37) which lever (14) is rotatably connected to the pendulum (7) on the one hand and is under the action of a pendulum spring (11) on the other hand.

4. Oscillatory pendulum device according to Claims 1 to 3, characterized in that the lever (14) by means of a finger (33) arranged at an arm (26) touches the flange centrally and arrests the pendulum (7) under the action of the pendulum spring (11) by pressure on the support (16).

5. Oscillatory pendulum device according to Claims 1 to 3, characterized in that a coupler (15) is provided projecting through an opening (18) in the bottom (46) of the support (16) which coupler is on the one hand rotatably connected to the pendulum (7) on the other hand with an arm (26) of a lever (14) and that the end of the pendulum spring (11) is also connected to the arm (26) of the spring (14).

6. Oscillatory pendulum device according to Claims 1 to 5, characterized in that the flange (9) is arranged at a bushing (10) connected to the pendulum arm (16).

**Revendications**

1. Dispositif vibrateur pour enregistreur de route avec un pendule (7) coopérant avec un ressort pendulaire (11) dont la masse pendulaire, réagissant sur des vibrations dues au fonctionnement d'un véhicule automobile, est disposée sur un bras pendulaire (6) rigide monté à rotation et dont la disposition dans l'enregistreur de route a été prise de telle sorte que, dans les positions d'encastrement possibles de l'enregistreur de route dans un véhicule automobile, ledit pendule présente toujours la même sensibilité aux vibrations, au moins en ce qui concerne les accélérations de sens vertical, que le ressort pendulaire (11) agit dans le sens de l'axe géométrique du pendule (7), qu'une bride (9) est disposée au bras pendulaire (6), et qu'une pièce de repos stationnaire (16) sur laquelle s'auppie, au moyen de la bride (9), le pendule (7) subissant l'action du ressort pendulaire (11), est prévue et associée audit pendule (7) de telle sorte que l'axe pendulaire géométrique soit toujours dirigé horizontalement quelle que soit la position d'encastrement possible de l'enregistreur de route (1).

2. Dispositif vibrateur selon la revendication 1, caractérisé par le fait que la pièce de repos (16) et la bride (9) constituent les éléments d'un support à couteau annulaire et que ladite pièce de repos (16) est réalisée sous forme de crapaudine associée à ladite bride (9).

3. Dispositif vibrateur selon l'une quelconque les revendications 1 et 2, caractérisé par le fait qu'il est prévu un levier (14), articulé sur un axe stationnaire (25) portant un stylet inscripteur (30) ou agissant sur un organe enregistreur (35, 37) monté séparément, étant, d'une part, articulé sur le pendule (7) et subissant, d'autre part, l'action du ressort pendulaire (11).

4. Dispositif vibrateur selon l'une quelconque des revendications 1 à 3, caractérisé par le fait que le levier (14) agit, au moyen d'un doigt (33) formé sur un bras (26), sur le centre de la bride (9) et maintient, sous l'action du ressort pendulaire (11), le pendule (7) par pression sur la pièce de repos (16).

5. Dispositif vibrateur selon l'une quelconque des revendications 1 à 3, caractérisé par le fait qu'il est prévu une bielle (15), traversant un orifice (18) au fond (46) de la pièce de repos (16), qui est articulée, d'une part, sur le pendule (7), d'autre part, sur le bras (26) du levier (14) et que l'une des extrémités du ressort pendulaire (11) est également appliquée au bras (26) dudit levier (14).

6. Dispositif vibrateur selon l'une quelconque des revendications 1 à 5, caractérisé par le fait que la bride (9) est formée sur une douille (10) pouvant être raccordée au bras pendulaire (6).

FIG. 4

FIG. 5

FIG. 1

FIG. 2

FIG.3